(19) Europäisches Patentamt
European Patent Office
Office européen des brevets

(11) EP 4 796 598 A1

# (12) EUROPEAN PATENT APPLICATION
published in accordance with Art. 153(4) EPC

(43) Date of publication:
**26.08.2026 Bulletin 2026/35**

(21) Application number: **24879697.1**

(22) Date of filing: **15.10.2024**

(51) International Patent Classification (IPC):
***C08L 89/04*** *(2006.01)* ***C08K 5/19*** *(2006.01)*
***C08L 1/00*** *(2006.01)* ***C08L 29/04*** *(2006.01)*
***C08L 31/04*** *(2006.01)*

(52) Cooperative Patent Classification (CPC):
**C08K 5/19; C08L 1/00; C08L 29/04; C08L 31/04; C08L 89/04**

(86) International application number:
**PCT/JP2024/036652**

(87) International publication number:
**WO 2025/084274 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 JP 2023178243**

(71) Applicant: **Pharma Foods International Co., Ltd.
Kyoto 615-8245 (JP)**

(72) Inventors:
- **SHINODA, Katsumi
Kyoto-shi, Kyoto 615-8245 (JP)**
- **KOGA, Keita
Kyoto-shi, Kyoto 615-8245 (JP)**
- **KIM, Mujo
Kyoto-shi, Kyoto 615-8245 (JP)**

(74) Representative: **Vossius & Partner
Patentanwälte Rechtsanwälte mbB
Siebertstraße 3
81675 München (DE)**

## (54) METHOD FOR DISSOLVING SPARINGLY WATER-SOLUBLE PROTEIN, PROTEIN SOLUTION OBTAINED BY SAID METHOD, AND MOLDED BODY OF SAID SOLUTION

(57) The present invention provides: a method for dissolving a sparingly water-soluble protein; and a molded article made from a protein solution obtained by the method. The present invention provides: a method for dissolving a sparingly water-soluble protein, the method comprising a step for mixing together a hydroxyl group-containing polymer, a sparingly water-soluble protein, and an ionic liquid. Furthermore, the present invention makes it possible to produce a molded body from a sparingly water-soluble protein solution obtained by such method.



Processed by Luminess, 75001 PARIS (FR)

## Description

[Technical Field]

The present invention is directed to a method of dissolving a sparingly water-soluble protein and a protein solution obtained thereby, and particularly directed to a method of dissolving a hydroxyl group-containing polymer and a sparingly water-soluble protein in an ionic liquid, a sparingly water-soluble protein solution obtained thereby, and a molded body thereof.

[Background Art]

In recent years, SDGs have attracted attention, and efforts have been made to effectively use resources that had been discarded in order to aim for a sustainable society, and to sustain a rich environment without destroying the Earth. As part thereof, it has been desired that a sparingly water-soluble protein, which is a natural product that has been discarded because it is difficult to reuse, be formed into a homogeneous dissolved product with a hydroxyl group-containing polymer, which is also a natural product, and that the product be reused as molded products in the form of fibers or films.

[Summary of Invention]

[Solution to Problem]

The present inventors have found a method of dissolving a sparingly water-soluble protein in order to recycle resources, in addition to effectively utilizing resources that had been discarded. The present inventors have also found a method of taking out a sparingly water-soluble protein in a high-molecular-weight range and carrying out solubilization without reducing the molecular weight of the sparingly water-soluble protein by hydrolysis in order to express a novel function. Accordingly, the present invention provides a method of dissolving a sparingly water-soluble protein by using an ionic liquid.

According to the major viewpoints of the present invention, the following inventions are provided.

(Item 1)

A method of dissolving a sparingly water-soluble protein, the method comprising
the step of mixing a hydroxyl group-containing polymer, a sparingly water-soluble protein, and an ionic liquid.

(Item 2)

The method of any one of the items above, further comprising the step of mixing a dissolution assisting agent.

(Item 3)

The method of any one of the items above, wherein the dissolution assisting agent is a surfactant.

(Item 4)

The method of any one of the items above, wherein the surfactant is a cationic surfactant having a superacid as a counter ion.

(Item 5)

The method of any one of the items above, wherein when a total weight of the sparingly water-soluble protein and a hydroxyl group-containing polymer is set as 100 wt%, a content of the surfactant is about 0.05 to about 10 wt%.

(Item 6)

The method of any one of the items above, wherein when a total weight of the sparingly water-soluble protein and a hydroxyl group-containing polymer is set as 100 wt%, a content of the sparingly water-soluble protein is about 5 to about 90 wt%.

(Item 7)

The method of any one of the items above, wherein the sparingly water-soluble protein comprises eggshell membrane, wool, chicken feather, silk, and scale, and a partial hydrolysate and/or a partially reduced product thereof.

(Item 8)

The method of any one of the items above, wherein the ionic liquid comprises imidazolium cation, pyridinium cation, and alkylammonium cation.

(Item 9)

The method of any one of the items above, wherein the hydroxyl group-containing polymer comprises a modified hydroxyl group-containing polymer in which a functional group is bonded to the hydroxyl group-containing polymer.

(Item 10)

The method of any one of the items above, wherein the hydroxyl group-containing polymer comprises cellulose, polyvinyl alcohol, and a saponified product of polyvinyl acetate.

(Item 11)

A dissolved product obtained by dissolving a hydroxyl group-containing polymer and a sparingly water-soluble protein in an ionic liquid.

(Item 12)

The dissolved product of any one of the items above, further comprising a dissolution assisting agent.

(Item 13)

The dissolved product of any one of the items above, wherein the dissolution assisting agent is a surfactant.

(Item 14)

The dissolved product of any one of the items above, wherein the surfactant is a cationic surfactant having a superacid as a counter ion.

(Item 15)

The dissolved product of any one of the items above, wherein when a total weight of the sparingly water-soluble protein and a hydroxyl group-containing polymer is set as 100 wt%, a content of the surfactant is about 0.05 to about 10 wt%.

(Item 16)

The dissolved product of any one of the items above, wherein when a total weight of the sparingly water-soluble protein and a hydroxyl group-containing polymer is set as 100 wt%, a content of the sparingly water-soluble protein is about 5 to about 90 wt%.

(Item 17)

The dissolved product of any one of the items above, wherein the sparingly water-soluble protein comprises eggshell membrane, wool, chicken feather, silk, and scale, and a partial hydrolysate and/or a partially reduced product thereof.

(Item 18)

The dissolved product of any one of the items above, wherein the ionic liquid comprises imidazolium cation, pyridinium cation, and alkylammonium cation.

(Item 19)

The dissolved product of any one of the items above, wherein the hydroxyl group-containing polymer comprises a modified hydroxyl group-containing polymer in which a functional group is bonded to the hydroxyl group-containing polymer.

(Item 20)

The dissolved product of any one of the items above, wherein the hydroxyl group-containing polymer comprises cellulose, polyvinyl alcohol, and a saponified product of polyvinyl acetate.

(Item 21)

A method of manufacturing a polymer molded body containing a sparingly water-soluble protein, the method comprising:

the step of providing an ionic liquid in which a sparingly water-soluble protein and a hydroxyl group-containing polymer are dissolved; and
the step of precipitating a polymer molded body from the ionic liquid.

(Item 22)

The method of any one of the items above, wherein providing the ionic liquid is carried out by:

(a) the step of mixing a sparingly water-soluble protein with an ionic liquid;
(b) the step of mixing a hydroxyl group-containing polymer with an ionic liquid; and
(c) the step of mixing a protein solution obtained in step (a) with a polymer solution obtained in step (b).

(Item 23)

The method of any one of the items above, wherein providing the ionic liquid is carried out by:
the step of mixing a sparingly water-soluble protein and a hydroxyl group-containing polymer with an ionic liquid simultaneously or sequentially.

(Item 23A)

A method of manufacturing a polymer molded body containing a sparingly water-soluble protein, the method comprising:

(a) the step of mixing a sparingly water-soluble protein with an ionic liquid;
(b) the step of mixing a hydroxyl group-containing polymer with an ionic liquid;
(c) the step of mixing a protein solution obtained in step (a) with a polymer solution obtained in step (b); and
(d) the step of precipitating a polymer molded body from a solution obtained in step (c).

(Item 23B)

A method of manufacturing a polymer molded body containing a sparingly water-soluble protein, the method comprising:

(a') the step of mixing a sparingly water-soluble protein and a hydroxyl group-containing polymer with an ionic liquid simultaneously or sequentially; and
(b') the step of precipitating a polymer molded body from a solution obtained in step (a').

(Item 24)

The method of any one of the items above, wherein a dissolution assisting agent is further mixed in the ionic liquid.

(Item 25)

The method of any one of the items above, wherein the sparingly water-soluble protein comprises eggshell membrane, wool, chicken feather, silk, and scale, and a partial hydrolysate and/or a partially reduced product thereof.

(Item 26)

The method of any one of the items above, wherein the ionic liquid comprises imidazolium cation, pyridinium cation, and alkylammonium cation.

(Item 27)

The method of any one of the items above, wherein the hydroxyl group-containing polymer comprises a modified hydroxyl group-containing polymer in which a functional group is bonded to the hydroxyl group-containing polymer.

(Item 28)

The method of any one of the items above, wherein the hydroxyl group-containing polymer comprises cellulose, polyvinyl alcohol, and a saponified product of polyvinyl acetate.

(Item 29)

A method of manufacturing a polymer molded body containing a sparingly water-soluble protein, the method comprising
the step of extruding the dissolved product of any one of the items above into a poor solvent for a hydroxyl group-containing polymer and a sparingly water-soluble protein.

(Item 30)

A polymer molded body containing a sparingly water-soluble protein, the molded body being obtained by a method comprising:

the step of providing an ionic liquid in which a sparingly water-soluble protein and a hydroxyl group-containing polymer are dissolved; and
the step of precipitating a polymer molded body from the ionic liquid.

(Item 31)

The molded body of any one of the items above, wherein providing the ionic liquid is carried out by:

(a) the step of mixing a sparingly water-soluble protein with an ionic liquid;
(b) the step of mixing a hydroxyl group-containing polymer with an ionic liquid; and
(c) the step of mixing a protein solution obtained in step (a) with a polymer solution obtained in step (b).

(Item 32)

The molded body of any one of the items above, wherein providing the ionic liquid is carried out by:
the step of mixing a sparingly water-soluble protein and a hydroxyl group-containing polymer with an ionic liquid simultaneously or sequentially.

(Item 30A)

A polymer molded body containing a sparingly water-soluble protein, the molded body being obtained by a method comprising:

(a) the step of mixing a sparingly water-soluble protein with an ionic liquid;
(b) the step of mixing a hydroxyl group-containing polymer with an ionic liquid;
(c) the step of mixing a protein solution obtained in step (a) and a polymer solution obtained in step (b); and
(d) the step of precipitating a polymer molded body from a solution obtained in step (c).

(Item 30B)

A polymer molded body containing a sparingly water-soluble protein, the molded body being obtained by a method comprising:

(a') the step of mixing a sparingly water-soluble protein and a hydroxyl group-containing polymer with an ionic liquid simultaneously or sequentially; and
(b') the step of precipitating a polymer molded body from a solution obtained in step (a').

(Item 33)

The molded body of any one of the items above, wherein the molded body comprises fiber, yarn, fabric, knit, braid, nonwoven fabric, and film.

(Item 34)

A kit for manufacturing a polymer molded body containing a sparingly water-soluble protein, the kit comprising an ionic liquid, a hydroxyl group-containing polymer, and a sparingly water-soluble protein.

(Item 35)

The kit of any one of the items above, further comprising a dissolution assisting agent.

(Item 36)

The kit of any one of the items above, wherein the dissolution assisting agent is a surfactant.

(Item 37)

The kit of any one of the items above, wherein the surfactant is a cationic surfactant having a superacid as a counter ion.

(Item 38)

The kit of any one of the items above, wherein when a total weight of the sparingly water-soluble protein and a hydroxyl group-containing polymer is set as 100 wt%, a content of the surfactant is about 0.05 to about 10 wt%.

(Item 39)

The kit of any one of the items above, wherein when a total weight of the sparingly water-soluble protein and a hydroxyl group-containing polymer is set as 100 wt%, a content of the sparingly water-soluble protein is about 5 to about 90 wt%.

(Item 40)

The kit of any one of the items above, wherein the sparingly water-soluble protein comprises eggshell membrane, wool, chicken feather, silk, and scale, and a partial hydrolysate and/or a partially reduced product thereof.

(Item 41)

The kit of any one of the items above, wherein the ionic liquid comprises imidazolium cation, pyridinium cation, and alkylammonium cation.

(Item 42)

The kit of any one of the items above, wherein the hydroxyl group-containing polymer comprises a modified hydroxyl group-containing polymer in which a functional group is bonded to the hydroxyl group-containing polymer.

(Item 43)

The kit of any one of the items above, wherein the hydroxyl group-containing polymer comprises cellulose, polyvinyl alcohol, and a saponified product of polyvinyl acetate.

In the present disclosure, in addition to the disclosed combinations, the above-mentioned one or more characteristics are intended to be able to be provided in further combinations. Further embodiments and advantages of the present disclosure would be recognized by those skilled in the art by reading and understanding the following detailed explanation as needed.

The characteristics and significant actions/effects of the present disclosure that are not described above would be clear to those skilled in the art by seeing the following embodiment section and drawings of the invention.

The present invention makes it possible to produce a protein solution that is excellent in effective utilization of resources of sparingly water-soluble proteins such as eggshell membranes, chicken feathers, wool, and scales, which have often been discarded, and that can easily provide a molded body to which new functionality has been imparted.

The protein solution of the present invention and a molded body thereof can impart new functionality in addition to inherent property, and therefore can have functionalities such as moisture absorption and release property, deodorizing property, and antibacterial property.

[Brief Description of Drawings]

[Figure 1] Figure 1 is a scanning electron microscope (SEM) photograph of a cross section of spun cotton obtained by spinning the protein solution produced in Example 2.

[Figure 2] Figure 2 is a scanning electron microscope (SEM) photograph of a cross section of spun cotton obtained by spinning the protein solution produced in Example 11.

[Figure 3] Figure 3 is a scanning electron microscope (SEM) photograph of a cross section of spun cotton obtained by spinning the protein solution produced in Comparative Example 2.

[Description of Embodiments]

Hereinafter, the present disclosure will be explained while showing the best mode. Throughout the entire specification, singular form expressions are to be understood to include the concept of plural forms unless otherwise specified. Accordingly, singular articles (for example, "a", "an" and "the" in English) are to be understood to include the concept of plural forms unless otherwise specified. In addition, it is to be understood that terms used herein are used in the meaning ordinarily used in the subject field unless otherwise specified. Therefore, unless defined otherwise, all technical and scientific terms used herein have the same meanings as commonly understood by those skilled in the art of the field to which the present disclosure pertains. In the event of any conflict, the present specification (including definitions) shall prevail.

Hereinafter, definitions of terms particularly used herein and/or basic technical contents will be appropriately explained.

As used herein, the term "about" means $\pm 10\%$ of the numerical value that follows.

As used herein, "sparingly water-soluble protein" refers to a protein that does not dissolve transparently even when about 0.1 wt% aqueous solution is heated at about 80 °C for about 3 hours. As a method of determining whether or not a protein is a sparingly water-soluble protein, whether or not the above conditions are satisfied can be confirmed using a conventional method. Sparingly water-soluble proteins can include, for example, eggshell membrane, wool, chicken feathers, scales, silk, and the like.

As used herein, "partial hydrolysate" of a sparingly water-soluble protein refers to a hydrolysate of the sparingly water-soluble protein in which hydrolysis has been stopped in a high-molecular-weight region. A partial hydrolysate can comprise a weight-average molecular weight of about 10,000 or more. Furthermore, as used herein, "partially reduced product" of a sparingly water-soluble protein refers to a reduced product of the sparingly water-soluble protein in which reduction has been stopped in a high-molecular-weight region. A partially reduced product can comprise a weight-average molecular weight of about 10,000 or more.

As used herein, "protein solution" obtained by dissolving a sparingly water-soluble protein is broadly interpreted

and refers mainly to a solution in which a sparingly water-soluble protein is dissolved.

As used herein, "polymer molded body" is broadly interpreted and refers to a molded body having a polymer as a main component.

As used herein, "hydroxyl group-containing polymer" is broadly interpreted and refers to a polymeric compound having a hydroxyl group. Hydroxyl group-containing polymers include, for example, polysaccharides such as starch, glycogen, cellulose, chitin, agarose, hyaluronic acid, chondroitin sulfate, pectin, and carrageenan; polyvinyl alcohol (PVA); and synthetic polymers such as phenol resins and polyvinyl acetate. Furthermore, hydroxyl group-containing polymers can also include regenerated cellulose and partially saponified products of polyvinyl acetate.

As used herein, mixing using "high shear force" refers to mixing liquids with each other or mixing a liquid and a solid while shearing them with a stirring blade rotating at a high speed. A stirrer capable of providing high shear force includes a homogenizer, a turbo-type stirrer, high-shear mixers such as a bio mixer, a high-pressure homogenizer, an ultrasonic homogenizer, and an in-line mixer (including a static mixer and an injection molding mixer (single-screw and twin-screw)).

As used herein, mixing using "vibration" is broadly interpreted and refers to stirring a liquid or a solid and a solvent while vibrating them in a container containing the liquid or the solid to be mixed. Mixing using vibration can be achieved, for example, by stirring with a stirrer, stirring by ultrasonic vibration, stirring by vibration at a molecular level, or the like.

As used herein, a "dissolved" state includes a state in which the appearance of a solution is transparent, translucent, or emulsified.

(Preferred Embodiments)

Preferred embodiments of the present disclosure are explained below. The embodiments provided below are provided for better understanding of the present disclosure, and the scope of the present disclosure should not be limited to the following description. Accordingly, it is apparent that those skilled in the art can make appropriate modifications within the scope of the present disclosure with reference to the description herein. In addition, the following embodiments of the present disclosure can be used alone or can be used in combination with each other.

One aspect of the claimed inventions provides a method of dissolving a sparingly water-soluble protein, the method comprising the step of mixing a hydroxyl group-containing polymer, a sparingly water-soluble protein, and an ionic liquid. In one embodiment of the claimed inventions, a sparingly water-soluble protein solution can be obtained by mixing an ionic liquid in which the hydroxyl group-containing polymer is dissolved and a sparingly water-soluble protein, or a sparingly water-soluble protein solution can be obtained by combining a hydroxyl group-containing polymer and a sparingly water-soluble protein to mix with an ionic liquid. In another embodiment, a sparingly water-soluble protein solution can be obtained by mixing a sparingly water-soluble protein into an ionic liquid and then adding a hydroxyl group-containing polymer.

<Sparingly Water-Soluble Protein>

In one embodiment, the method of the present invention can obtain a solution of a sparingly water-soluble protein by mixing a sparingly water-soluble protein into an ionic liquid.

In one embodiment, an ionic liquid can include ionic liquids composed of the following cations and anions.

Cations constituting an ionic liquid include, for example, an imidazolium cation (a11), a pyridinium cation (a12), an alkylammonium cation (a13), and the like, but are not limited thereto.

Imidazolium cations (a11) include, for example, N-methylimidazolium, N-ethylimidazolium, 1,3-dimethylimidazolium, 1,3-diethylimidazolium, 1-ethyl-3-methylimidazolium, 1-propyl-3-methylimidazolium, 1-butyl-3-methylimidazolium, 1-hexyl-3-methylimidazolium, 1,2,3-trimethylimidazolium, 1,2,3,4-tetramethylimidazolium, and the like, but are not limited thereto.

Pyridinium cations (a12) include, for example, N-propylpyridinium, N-butylpyridinium, 1,4-dimethylpyridinium, 1-butyl-4-methylpyridinium, 1-butyl-2,4-dimethylpyridinium, and the like, but are not limited thereto.

Alkylammonium cations (a13) include, for example, trimethylammonium, ethyldimethylammonium, diethylmethylammonium, triethylammonium, tetramethylammonium, triethylmethylammonium, tetraethylammonium, and the like, preferably triethylmethylammonium cation, tetraethylammonium cation.

In one embodiment, the cation constituting an ionic liquid may be either one of each of (a11) to (a13), or a combination of two or more of each thereof, and may further be one or a combination of two or more of any of (a11) to (a13).

Among these cations, preferred from the viewpoint of solubility are the imidazolium cation (a11), the pyridinium cation (a12), more preferably imidazolium cation (a11).

Anions constituting an ionic liquid include halogen anion, carboxylate anion, sulfonate anion, and phosphate anion. In one embodiment, halogen anions include chloride anion, bromide anion, iodide anion, and the like.

Carboxylate anions include monocarboxylate anions and dicarboxylate anions having 1 to 18 carbon atoms,

such as formate anion, acetate anion, lactate anion, oxalate anion, fumarate anion, adipate anion, pyruvate anion, and the like.

Sulfonate anions include sulfonate anion, methanesulfonate anion, octanesulfonate anion, dodecanesulfonate anion, eicosanesulfonate anion, and the like.

Phosphate anions include phosphate anion, methyl phosphate monoester anion, ethyl phosphate monoester anion, propyl phosphate monoester anion, butyl phosphate monoester anion, methyl phosphate diester anion, ethyl phosphate diester anion, propyl phosphate diester anion, butyl phosphate diester anion, and the like.

In one embodiment, from the viewpoint of solubility, the anion constituting an ionic liquid is preferably halogen anion, carboxylate anion, and phosphate anion, more preferably carboxylate anion, halogen anion.

In one embodiment, among the ionic liquids, from the viewpoint of solubility and orientation, an ionic liquid that is liquid at 100 °C or lower is preferred. In one embodiment, from the viewpoint of handling, a more preferred ionic liquid is an ionic liquid in which the ionic liquid (A) itself is liquid at 25 °C (room temperature).

Such ionic liquids include, for example, imidazolium carboxylate, imidazolium chloride, and the like, more preferably 1-ethyl-3-methylimidazolium formate, 1-ethyl-3-methylimidazolium acetate, 1-ethyl-2,3-dimethylimidazolium acetate, 1-butyl-3-methylimidazolium acetate, 1-ethyl-3-methylimidazolium fumarate, 1-ethyl-3-methylimidazolium lactate, 1-butyl-3-methylimidazolium chloride, 1-ethyl-3-methylimidazolium chloride. Particularly preferred examples include 1-ethyl-3-methylimidazolium formate, 1-ethyl-3-methylimidazolium acetate, 1-butyl-3-methylimidazolium acetate, 1-ethyl-3-methylimidazolium chloride, 1-butyl-3-methylimidazolium chloride.

The ionic liquid of the present invention may also comprise water, a lower alcohol, and/or glycols, and in one embodiment, the content of water, lower alcohol, and/or glycols comprised in the ionic liquid is preferably 10 wt% or less.

In one embodiment of the present invention, an eggshell membrane can be mentioned as an example of the sparingly water-soluble protein. The origin of the eggshell membrane as the sparingly water-soluble protein dissolved by the method of the present invention is not particularly limited. For example, as the eggshell membrane, eggshell membranes of poultry birds such as chicken, quail, turkey, duck, domestic duck, goose, ostrich, guinea fowl, onagadori, bantam, pigeon, mute swan, emu, or pheasant can be used. In one embodiment of the present invention, chicken is preferred in terms of being easily available, producing in large quantities as a laying species, the eggs being large, and a large-scale breeding method being established.

Normally, an eggshell membrane has an eggshell attached thereto, and when dissolved as it is by hydrolysis or the like, the eggshell remains insoluble and exists as a foreign substance when obtaining a molded body, which is thus not preferable. In order to remove the eggshell, it is preferable that the eggshell membrane containing the eggshell be immersed in an aqueous solution such as hydrochloric acid or phosphoric acid so that the eggshell is dissolved in water and then removed in advance by filtration and washing with water.

In one embodiment of the present invention, the surfactant can include an anionic surfactant, a cationic surfactant, an amphoteric surfactant, a nonionic surfactant, and the like. In one embodiment of the present invention, when the hydroxyl group-containing polymer and the sparingly water-soluble protein are uniformly dissolved and molded into a film form or a fiber form, regardless of the ionic property of the surfactant, the orientation of the protein and polymer components is improved, and a molded product with an excellent physical property such as strength can be obtained.

In one embodiment of the present invention, from the viewpoints of solubility upon dissolution and orientation upon molding, preferred examples can include a cationic surfactant, an amphoteric surfactant, and a nonionic surfactant, more preferably a cationic surfactant.

As used herein, "dissolution assisting agent" refers to a substance that promotes dissolution of a substance into a solution. Dissolution assisting agents can include, for example, a surfactant, an acid/alkaline agent, an oxidation-reduction agent, and the like.

When it is not desired that the surfactant used remain in the final molded body, it is desirable to use a water-soluble surfactant. Conversely, when it is desired that the function of the surfactant be utilized in the molded body, it is desirable to use a surfactant with a low HLB (Hydrophilic-Lipophilic Balance). In one embodiment, the HLB of the surfactant used in the method of the present invention can be about 20 or less, about 19 or less, about 18 or less, about 17 or less, about 16 or less, about 15 or less, about 14 or less, about 13 or less, about 12 or less, about 11 or less, about 10 or less, about 9 or less, about 8 or less, about 7 or less, about 6 or less, about 5 or less. In particular, in the case of a cationic surfactant, when the counter ion is a superacid, the surfactant becomes sparingly water-soluble and the content of the cationic surfactant remaining in the final molded body increases, thereby expressing its function, which is thus preferable.

As used herein, "superacid" refers to an acid stronger than 100 wt% sulfuric acid. Conjugate anions of the superacid can include, for example, fluorosulfonic acid, trifluoromethanesulfonic acid, tetrafluoroboric acid, and the like.

<Pulverization of Sparingly Water-Soluble Protein>

In one embodiment, the sparingly water-soluble protein can be pulverized in order to facilitate dissolution of the sparingly water-soluble protein. In one embodiment, the size of the diameter after pulverizing the sparingly water-soluble

protein is not particularly limited. For example, when the sparingly water-soluble protein is pulverized, the diameter thereof can be about 0.1 μm or more, about 0.2 μm or more, about 0.3 μm or more, about 0.4 μm or more, about 0.5 μm or more, about 0.6 μm or more, about 0.7 μm or more, about 0.8 μm or more, about 0.9 μm or more, about 1.0 μm or more, about 1.5 μm or more, about 2.0 μm or more, about 3.0 μm or more, about 4.0 μm or more, or about 5.0 μm or more, and the diameter thereof can be about 5 mm or less, about 4 mm or less, about 3 mm or less, about 2 mm or less, about 1 mm or less. In one embodiment, when the sparingly water-soluble protein is pulverized, the diameter thereof is preferably about 0.1 μm or more, about 5 mm or less, more preferably about 1 μm or more, about 1 mm or less. By setting this range, the sparingly water-soluble protein can be uniformly dissolved when forming a solution using the method of the present invention.

<Moisture Content of Sparingly Water-Soluble Protein>

In one embodiment, the moisture content of the sparingly water-soluble protein can be defined in order to facilitate dissolution of the sparingly water-soluble protein. When the sparingly water-soluble protein is washed with water as a pretreatment in order to facilitate dissolution, in one embodiment, the moisture content can be about 80 wt% or less, about 70 wt% or less, about 60 wt% or less, about 50 wt% or less, about 40 wt% or less, about 30 wt% or less, about 20 wt% or less, about 10 wt% or less. Furthermore, said moisture content is preferably set to be about 5 wt% or less, about 4 wt% or less, about 3 wt% or less, about 2 wt% or less, about 1 wt% or less by freeze-drying or the like.

<Dissolution of Sparingly Water-Soluble Protein>

In one embodiment, the method of the present invention can dissolve the sparingly water-soluble protein by mixing the sparingly water-soluble protein with an ionic liquid. For example, dissolution can be achieved by applying high shear force and/or vibration to a mixed solution of the sparingly water-soluble protein and the ionic liquid.

In one embodiment, the concentration of the sparingly water-soluble protein when dissolving the sparingly water-soluble protein is not particularly limited, but preferably about 5 wt% to about 50 wt%, and can be, for example, about 5 wt%, about 10 wt%, about 15 wt%, about 30 wt%, or about 50 wt%.

In one embodiment, the temperature of the solution when dissolving the sparingly water-soluble protein is not particularly limited, but is preferably about 40 °C or higher, and more preferably can be about 45 °C or higher, 50 °C or higher, about 55 °C or higher, 65 °C or higher, about 70 °C or higher, 75 °C or higher, about 80 °C or higher, about 90 °C or higher.

In one embodiment, when dissolving the sparingly water-soluble protein, a solution obtained by mixing the sparingly water-soluble protein and an ionic liquid can be stirred according to a conventional method, for example, can be stirred using a conventionally known stirrer. In one embodiment, the solution obtained by mixing the sparingly water-soluble protein and the ionic liquid can also be stirred using a stirrer having high shear force such as a high-viscosity stirrer or a homomixer, and an ultrasonic stirrer can also be used.

In one embodiment, in the method of the present invention, a sparingly water-soluble protein can be dissolved by mixing with an ionic liquid after being pulverized to a diameter of the sizes described above. In conventional techniques, a sparingly water-soluble protein has been dissolved by reducing its molecular weight through hydrolysis to form a solution. Hydrolysis of a protein is carried out using acid (hydrochloric acid, sulfuric acid, or the like), alkali (sodium hydroxide, potassium hydroxide, or the like), or proteolytic enzyme (enzyme derived from a microorganism, enzyme derived from a plant, enzyme derived from an animal). For example, a soluble protein having relatively large molecular weights in the case of hydrolysis at high temperature in the presence of alkali has been proposed (see, for example, JP Patent No. 6288686). In addition, a protein hydrolysate with high cystine content has been proposed by causing a proteolytic enzyme having an optimum pH in an alkaline region to act (see, for example, Japanese Laid-Open Publication No. 2018-177713).

A technique has also been proposed in which a protein is dissolved in thiopropionic acid or the like and spun by an electrospinning method to form a fibrous aggregate (see, for example, Japanese Laid-Open Publication No. 2009-89859 and JP Patent No. 5166953). In addition, a method has been proposed in which a soluble protein obtained by hydrolyzing a protein in the coexistence of a reducing agent is processed into a fibrous fabric (see, for example, JP Patent No. 4387806 and Japanese Laid-Open Publication No. 2004-84154).

However, in the hydrolysis in the presence of alkali described in JP Patent No. 6288686, the step of neutralizing with an acidic substance is required in order to stop the decomposition reaction, and there is a problem that the cystine content contained in the protein decreases during the neutralization step. In addition, in the hydrolysis using an enzyme described in Japanese Laid-Open Publication No. 2018-177713, it is difficult to obtain a solubilized product of a protein with a large molecular weight, and since the proteolytic enzyme itself which is a catalyst is expensive, the manufacturing cost becomes high.

Furthermore, in the method of hydrolysis using an acid, the apparatus tends to corrode, and a protein is excessively decomposed, resulting in problems such as an excessively reduced molecular weight outside the desired molecular weight distribution, browning, and production of by-products other than the desired hydrolysate. Moreover, in

the fiber manufacturing methods described in Japanese Laid-Open Publication No. 2009-89859 and JP Patent No. 5166953, a protein is dissolved in an acid and spun using a special apparatus, and even the fibrous aggregate will not have a natural protein structure. In addition, in the film and sheet described in JP Patent No. 4387806 and Japanese Laid-Open Publication No. 2004-84154, a hydrolyzed soluble protein is used, and the application is limited to a wound covering material such as a bandage.

Also in JP Patent No. 4070579, as a method of utilizing a sparingly water-soluble protein, functional rayon has been proposed in which a sparingly water-soluble protein such as animal hair is dissolved at pH 8 to 12, crosslinked with a water-soluble crosslinking agent in an alkaline aqueous solution to form a crosslinked protein, and then mixed with viscose and spun in order to introduce a functional component into viscose rayon. However, even in this method, a protein is subjected to alkaline hydrolysis and then crosslinked with a crosslinking agent, which is not different from other conventional techniques in terms of being different from the original protein.

In JP Patent No. 5071613, in order to attach a sparingly water-soluble effective component (for example, titanium dioxide, zinc oxide, or the like) to a target surface of a tooth, it has been proposed to dissolve the sparingly water-soluble effective component in an aqueous solution containing an electrolyte by using an amphoteric polymer compound having an anionic dissociative group and a cationic dissociative group in one molecule, or a combination of an anionic polymer compound or the like and a cationic polymer compound or the like. However, a sparingly water-soluble protein cannot be completely dissolved by this technique.

In one embodiment of the present invention, according to the method of the present invention, a sparingly water-soluble protein can be dissolved while avoiding the above problems. As a result, the protein solution obtained by dissolving a sparingly water-soluble protein by the method of the present invention can comprise the original structure and property of a natural protein. In addition, since a sparingly water-soluble protein can be used without hydrolysis or a partially hydrolyzed sparingly water-soluble protein can be used, molding such as fiber formation can be performed while maintaining a high molecular weight, and thereby it is possible to strengthen the strength of the molded body. Furthermore, the protein content can also be increased. For example, when an eggshell membrane is used as a sparingly water-soluble protein, the fibrous morphology remains as it is, and thus structural characteristics such as increased moisture retention, deodorizing property, and cell proliferation property can be expected.

In one embodiment, in the method of the present invention, a sparingly water-soluble protein can be used without hydrolysis or without reduction treatment, or a sparingly water-soluble hydrolysate obtained by partially hydrolyzing a sparingly water-soluble protein (partial hydrolysate) or a sparingly water-soluble reduced product obtained by partial reduction treatment of a sparingly water-soluble protein (partially reduced product) can be used. Conventional hydrolysis and/or reduction treatment methods such as alkaline hydrolysis, reducing agent treatment, and enzymatic decomposition can be used as a hydrolysis and/or reduction treatment method. For example, when an eggshell membrane is used as a sparingly water-soluble protein, in order to partially hydrolyze the eggshell membrane, it is possible to use a matter obtained by hydrolyzing the eggshell membrane in about a 5% alkaline aqueous solution at about 60 °C for about 1 hour, neutralizing with hydrochloric acid equivalent to the amount of alkali used, washing the precipitated hydrolysate with water, and drying the same. Even when other sparingly water-soluble proteins such as wool or feathers are used, similar partial hydrolysates can be obtained by adjusting the alkali concentration, hydrolysis temperature, time, or the like. In one embodiment, a sparingly water-soluble hydrolysate (partial hydrolysate) obtained by partially hydrolyzing a sparingly water-soluble protein, or a sparingly water-soluble reduced product (partially reduced product) obtained by carrying out partial reduction treatment to a sparingly water-soluble protein may have a weight-average molecular weight of about 10,000 or more, but is not limited thereto.

<Pulverization of Hydroxyl Group-Containing Polymer>

In one embodiment, a hydroxyl group-containing polymer can be pulverized in order to facilitate dissolution of the hydroxyl group-containing polymer. In one embodiment, the size of the diameter upon pulverization of a hydroxyl group-containing polymer is not particularly limited. For example, by mechanically pulverizing the hydroxyl group-containing polymer using a juicer or the like to form a cotton-like state, the hydroxyl group-containing polymer can be uniformly dissolved when forming a solution using the method of the present invention.

<Moisture Content of Hydroxyl Group-Containing Polymer>

In one embodiment, the moisture content of a sparingly water-soluble protein can be defined in order to facilitate dissolution of the sparingly water-soluble protein. When the hydroxyl group-containing polymer is washed with water as a pretreatment in order to facilitate dissolution of the hydroxyl group-containing polymer, in one embodiment, the moisture content can be about 80 wt% or less, about 70 wt% or less, about 60 wt% or less, about 50 wt% or less, about 40 wt% or less, about 30 wt% or less. It is preferable that the moisture content be about 20 wt% or less, about 10 wt% or less, or about 5 wt% or less by using a hot-air dryer or the like.

<Dissolution of Hydroxyl Group-Containing Polymer>

In one embodiment, in the method of the present invention, a hydroxyl group-containing polymer can be swollen by mixing the hydroxyl group-containing polymer with a water-containing ionic liquid and then completely dissolved by dehydration. As the water-containing ionic liquid, an ionic liquid with a water content of about 50 wt% or less, about 40 wt% or less, or about 30 wt% or less can be used. From the viewpoints of swelling property of the hydroxyl group-containing polymer and dehydration efficiency, it is preferable that the hydroxyl group-containing polymer be swollen in a water-containing ionic liquid with a water content of about 10 to about 30 wt%, and dehydrated until the water content becomes about 15 wt% or less, preferably about 10 wt% or less, dissolving the hydroxyl group-containing polymer.

In one embodiment, the concentration of the hydroxyl group-containing polymer when dissolving the hydroxyl group-containing polymer is not particularly limited, but is preferably about 5 wt% to about 30 wt%. For example, the concentration can be about 5 wt%, about 10 wt%, about 15 wt%, or about 20 wt%.

In one embodiment, the temperature of the solution when dissolving the hydroxyl group-containing polymer is not particularly limited, but is preferably about 40 °C or higher, and more preferably can be about 45 °C or higher, 50 °C or higher, about 55 °C or higher, about 65 °C or higher, about 70 °C or higher, 75 °C or higher, about 80 °C or higher, or about 90 °C or higher.

<Protein Solution of Sparingly Water-Soluble Protein>

In one aspect of the present invention, a protein solution obtained by dissolving a sparingly water-soluble protein in an ionic liquid is provided. The protein solution of the present invention is obtained by dissolving a sparingly water-soluble protein. Since sparingly water-soluble proteins are originally difficult to dissolve in water, they do not dissolve in water even when gel permeation chromatography is used, and therefore measurement of the molecular weight is impossible or impractical. In addition, it is difficult to decompose the protein solution obtained by dissolving the sparingly water-soluble protein in an ionic liquid and identify the amino acid sequence thereof.

In one embodiment of the present invention, the protein solution of the sparingly water-soluble protein of the present invention can be a protein solution obtained without producing a protein derivative such as by hydrolysis of the sparingly water-soluble protein. In another embodiment, the protein solution of the sparingly water-soluble protein of the present invention can be a protein solution obtained by partially hydrolyzing the sparingly water-soluble protein and dissolving the obtained hydrolysate in an ionic liquid. In still another embodiment, the protein solution of the sparingly water-soluble protein of the present invention can be a protein solution obtained by carrying out partial reduction treatment to the sparingly water-soluble protein and dissolving the obtained reduced product in an ionic liquid. In one embodiment of the present invention, the protein solution of the sparingly water-soluble protein of the present invention can be obtained by dissolving the sparingly water-soluble protein in an ionic liquid. As the ionic liquid and its concentration, and as the sparingly water-soluble protein, those described in other parts herein can be used.

<Regeneration of Solubilized Sparingly Water-Soluble Protein>

In one aspect of the present invention, there is provided a method of manufacturing a polymer molded body containing a sparingly water-soluble protein, comprising: (a) the step of providing an ionic liquid in which a sparingly water-soluble protein and a hydroxyl group-containing polymer are dissolved; and (b) the step of precipitating a polymer molded body from the ionic liquid.

In one aspect of the present invention, there is provided a method of manufacturing a polymer molded body containing a sparingly water-soluble protein, comprising: (a) the step of mixing a sparingly water-soluble protein with an ionic liquid; (b) the step of mixing a hydroxyl group-containing polymer with an ionic liquid; (c) the step of mixing a protein solution obtained in step (a) and a polymer solution obtained in step (b); and (d) the step of precipitating a polymer molded body from a solution obtained in step (c).

In one aspect of the present invention, there is provided a method of manufacturing a polymer molded body containing a sparingly water-soluble protein, comprising: (a') the step of mixing a sparingly water-soluble protein and a hydroxyl group-containing polymer with an ionic liquid simultaneously or sequentially; and (b') the step of precipitating a polymer molded body from a solution obtained in step (a').

In one embodiment of the present invention, a sparingly water-soluble protein and a hydroxyl group-containing polymer dissolved in an ionic solution can be regenerated by bringing them into contact with a poor solvent for these solutes to precipitate a mixture of the sparingly water-soluble protein and the hydroxyl group-containing polymer. In another embodiment, an ionic liquid in which a sparingly water-soluble protein and a hydroxyl group-containing polymer are dissolved is applied as a thin film onto a glass plate or the like, and this glass plate or the like is immersed in a poor solvent for these solutes so as to precipitate a film, thereby being able to regenerate the mixture of the sparingly water-soluble protein and the hydroxyl group-containing polymer. In one embodiment, the regenerated form may be cotton-like

or film-like, and after the regeneration, washing with water and drying can be further carried out to obtain a final product.

As used herein, "poor solvent" for a sparingly water-soluble protein and a hydroxyl group-containing polymer refers to a solvent in which both the sparingly water-soluble protein and the hydroxyl group-containing polymer dissolve at room temperature only up to about 1% at the maximum. Examples of the poor solvent for the sparingly water-soluble protein and the hydroxyl group-containing polymer include water; a lower alcohol; a mixed solvent of an ionic liquid and water and/or lower alcohol; and the like. From the viewpoint of recovery and reuse of an ionic liquid, a poor solvent is preferably a mixed solvent of an ionic liquid and water and/or lower alcohol.

In one embodiment of the present invention, a sparingly water-soluble protein and a hydroxyl group-containing polymer dissolved in an ionic liquid can be regenerated by precipitating a mixture of the sparingly water-soluble protein and the hydroxyl group-containing polymer through contact with a poor solvent for these solutes containing an acidic substance, in order to increase the residual ratio of the sparingly water-soluble protein. The acidic substance is not particularly limited, and in one embodiment, the acidic substance can include organic acids such as acetic acid and citric acid, and inorganic acids such as hydrochloric acid, phosphoric acid, and sulfuric acid. The acid concentration of the acidic substance is not particularly limited, but a solution of about 0.1 wt% to about 20 wt% is preferrable from the viewpoints of the residual ratio of the sparingly water-soluble protein and recovery and reuse of the ionic liquid.

In one aspect of the present invention, there is provided a polymer molded body containing a sparingly water-soluble protein, the molded body being obtained by a method comprising: (a) the step of providing an ionic liquid in which a sparingly water-soluble protein and a hydroxyl group-containing polymer are dissolved; and (b) the step of precipitating a polymer molded body from the ionic liquid.

In one aspect of the present invention, there is provided a polymer molded body containing a sparingly water-soluble protein, the molded body being obtained by a method comprising: (a) the step of mixing a sparingly water-soluble protein with an ionic liquid; (b) the step of mixing a hydroxyl group-containing polymer with an ionic liquid; (c) the step of mixing a protein solution obtained in step (a) and a polymer solution obtained in step (b); and (d) the step of precipitating a polymer molded body from a solution obtained in step (c).

In one aspect of the present invention, there is provided a polymer molded body containing a sparingly water-soluble protein, the molded body being obtained by a method comprising: (a') the step of mixing a sparingly water-soluble protein and a hydroxyl group-containing polymer with an ionic liquid simultaneously or sequentially; and (b') the step of precipitating a polymer molded body from a solution obtained in step (a').

As described above, the protein solution of the present invention is obtained by dissolving a sparingly water-soluble protein, and since sparingly water-soluble proteins are originally difficult to dissolve in water, they do not dissolve in water even when gel permeation chromatography is used, and measurement of the molecular weight is impossible or impractical. In addition, it is difficult to decompose the protein solution obtained by dissolving the sparingly water-soluble protein in an ionic liquid and identify the amino acid sequence thereof. Therefore, it is also difficult to express a polymer molded body obtained from such a protein solution of the present invention in terms of structure or property.

In one embodiment, a polymer molded body is not particularly limited as long as it is a molded body obtained from a hydroxyl group-containing polymer used as a material in the method of the present invention, which can include, for example, fiber, nonwoven fabric, film, and the like. Properties of the molded body obtained by the method of the present invention can include moisture absorption and release property, deodorizing property, antibacterial property, skin protective property, cell proliferation property, biocompatibility, metal adsorption property, and the like.

In one embodiment, in the method of preparing the polymer molded body of the present invention, an ionic liquid serving as a dissolving agent for a sparingly water-soluble protein and an ionic liquid serving as a dissolving agent for a hydroxyl group-containing polymer may be the same as or different from each other. In one embodiment, for example, 1-ethyl 3-methylimidazolium acetate can be used as an ionic liquid. In order to reuse the ionic liquid, it is preferable that the dissolving agent for dissolving a sparingly water-soluble protein and a hydroxyl group-containing polymer be the same.

In one embodiment, an aqueous solution of an ionic liquid used for precipitation of a sparingly water-soluble protein can be reused in the method of the present invention by concentration.

In one embodiment, as a hydroxyl group-containing polymer, a modified hydroxyl group-containing polymer in which a functional group is bonded to a hydroxyl group-containing polymer can also be used. By mixing an ionic liquid in which a sparingly water-soluble protein is dissolved and an ionic liquid in which a modified hydroxyl group-containing polymer is dissolved, and extruding the mixture into water or into a poor solvent for the solutes, a polymer molded body having functionality imparted thereto can be obtained.

In one embodiment, cellulose, regenerated cellulose, polyvinyl alcohol, and a saponified product of polyvinyl acetate can be used as a hydroxyl group-containing polymer or a modified hydroxyl group-containing polymer, and regenerated cellulose can be preferably used. A saponified product of polyvinyl acetate can be any product as long as a part of the polyvinyl acetate is saponified and comprises a hydroxy (OH) group.

In one embodiment, a protein solution of a sparingly water-soluble protein dissolved by the method of the present invention and a molded body thereof have functions and properties of the sparingly water-soluble protein itself used as a material, and can comprise, for example, moisturizing action, metal ion adsorption action, deodorizing action, antibacterial

action, and the like, and also physiological activities such as fibroblast proliferation action, active enzyme removal action, and cell activation action.

In one embodiment, a polymer material can also be selected so that the functions and properties comprised by the sparingly water-soluble protein can be more easily exerted. In one embodiment of the present invention, the protein solution and polymer molded body of the present invention are obtained from a sparingly water-soluble protein such as an eggshell membrane derived from a natural component, and therefore have excellent adhesion to human skin tissue. In one embodiment of the present invention, since the protein solution and polymer molded body of the present invention contain a component of a sparingly water-soluble protein such as an eggshell membrane, it is possible to comprise substantially the same properties as a sparingly water-soluble protein such as a natural eggshell membrane.

<Kit>

In one aspect of the present invention, there is provided a kit for manufacturing a polymer molded body containing a sparingly water-soluble protein, comprising an ionic liquid, a hydroxyl group-containing polymer, and a sparingly water-soluble protein.

By using such a kit, a dissolved product obtained by dissolving a sparingly water-soluble protein in an ionic liquid, or a polymer molded body containing a sparingly water-soluble protein, can be easily obtained. In one embodiment, as a sparingly water-soluble protein, an ionic liquid, and a hydroxyl group-containing polymer in the kit of the present invention, those explained in other parts herein can be used.

As used herein, the term "or" is used when "at least one or more" of the matters listed in a sentence can be adopted. As used herein, when it is explicitly stated that something is "within a range" between "two values", the range includes the two values themselves.

The references cited herein such as scientific literature, patents and patent applications, are incorporated herein by reference in their entireties to the same extent as if each reference were individually and specifically indicated to be incorporated by reference.

Accordingly, the present disclosure has been explained above by showing preferred embodiments for ease of understanding. Hereinafter, the present disclosure will be explained based on Examples. However, the above explanation and the following Examples are provided solely for the purpose of illustration, and are not intended to limit the present disclosure. Accordingly, the scope of the present disclosure is not limited to the embodiments or Examples specifically described herein, but is defined only by the Claims.

[Examples]

(Preparation of Polymer Molded Body)

According to Table 1 below, a sparingly water-soluble protein (eggshell membrane, wool, chicken feather, hydrolyzed eggshell membrane (water-insoluble), and hydrolyzed eggshell membrane (water-soluble)), cellulose, and a surfactant were each dissolved in an ionic liquid. The protein concentration and amount are as shown in Table 1. In the table, the unit of each numerical value for the ionic liquid, surfactant, protein, cellulose, and the like is wt%.

[Table 1]

| | | Example-1 | Example-2 | Example-3 | Example-4 | Example-5 | Example-6 | Example-7 | Example-8 | Example-9 | Example-10 | Example-11 | Comparative Example-1 | Comparative Example-2 |
|---|---|---|---|---|---|---|---|---|---|---|---|---|---|---|
| ionic liquid | emim-1 | 90 | 90 | 90 | 90 | 90 | | | 90 | 90 | 90 | 90 | 90 | 90 |
| | emim-2 | | | | | | 90 | | | | | | | |
| | emim-3 | | | | | | | 90 | | | | | | |
| surfactant | DFS | 0.1 | 0.1 | 0.1 | 0.1 | 0.1 | 0.1 | 0.1 | 0.1 | | | | 0.1 | 0.1 |
| | LD-36 | | | | | | | | | 0.35 | | | | |
| | PE-62 | | | | | | | | | | 0.25 | | | |
| protein | eggshell membrane | 0.5 | 5.0 | 9.0 | | | 5.0 | 5.0 | | 5.0 | 5.0 | 5.0 | 10.0 | |
| | wool | | | | 5.0 | | | | | | | | | |
| | chicken feather | | | | | 2.6 | | | | | | | | |
| | hydrolyzed eggshell membrane (water-insoluble) | | | | | | | | 5.0 | | | | | |
| | hydrolyzed eggshell membrane (water-soluble) | | | | | | | | | | | | | 5.0 |
| cellulose | | 9.5 | 5.0 | 1.0 | 5.0 | 7.4 | 5.0 | 5.0 | 5.0 | 5.0 | 5.0 | 5.0 | | 5.0 |
| total | | 100.1 | 100.1 | 100.1 | 100.1 | 100.1 | 100.1 | 100.1 | 100.1 | 100.35 | 100.25 | 100 | 100.1 | 100.1 |
| solid content total | | 10.1 | 10.1 | 10.1 | 10.1 | 10.1 | 10.1 | 10.1 | 10.1 | 10.4 | 10.3 | 10.0 | 10.0 | 10.0 |
| theoretical protein content/ solid content | | 5.0% | 49.5% | 89.1% | 49.5% | 25.7% | 49.5% | 49.5% | 49.5% | 48.3% | 48.8% | 50.0% | 100.0% | 50.0% |
| | | | | | | | | | | | | | | |
| spinnability | | ◎ | ◎ | ◎ | ◎ | ◎ | ◎ | ◎ | ◎ | ◎ | ◎ | ○ | × | ◎ |
| measured protein content/ solid content | | 4.9% | 51.1% | 85.2% | 44.3% | 23.1% | 45.2% | 46.2% | 40.2% | 40.6% | 41.8% | 47.8% | — | 6.0% |
| residual ratio | | 99% | 103% | 96% | 89% | 90% | 91% | 93% | 81% | 84% | 86% | 96% | — | 12% |
| | | | | | | | | | | | | | | |
| | | | | | | | | | | | | | | |
| | | | | | | | | | | | | | | |

The symbols in Table 1 are as shown in Table 2 below.

[Table 2]

| | | |
|---|---|---|
| ionic liquid | emim-1 | 1-ethyl-3-methylimidazolium acetate |
| | emim-2 | 1-ethyl-3-methylimidazolium formate |
| | emim-3 | 1-ethyl-3-methylimidazolium chloride |
| surfactant | DFS | didecyldimethylammonium trifluoromethanesulfonate ("Neojarm DFS," manufactured by Sanyo Chemical Industries, Ltd.) |
| | LD-36 | lauryldimethylaminoacetic acid betaine ("Lebon LD-36," manufactured by Sanyo Chemical Industries, Ltd.) |
| | PE-62 | polyoxyethylene–polyoxypropylene block polymer ("Newpol PE-62," manufactured by Sanyo Chemical Industries, Ltd.) |

In Table 1, "hydrolyzed eggshell membrane (water-soluble)" is an eggshell membrane that has been partially hydrolyzed, and "hydrolyzed eggshell membrane (water-soluble)" is an eggshell membrane hydrolyzed until soluble in water. The conditions for the respective hydrolysis are as follows.

A hydrolyzed eggshell membrane (water-soluble) was prepared by hydrolyzing an eggshell membrane in about 5% alkaline aqueous solution at about 60 °C for about 1 hour, neutralizing with hydrochloric acid equivalent to the amount of alkali used, washing the precipitated hydrolysate with water, and drying the same. A hydrolyzed eggshell membrane (water-soluble) was prepared by hydrolyzing an eggshell membrane in about 5% alkaline aqueous solution at about 60 °C for about 1 hour, neutralizing with hydrochloric acid equivalent to the amount of alkali used, filtering the precipitate, and using the hydrolysate remaining in the filtrate.

For the sparingly water-soluble protein and cellulose, a protein was dissolved in each ionic liquid shown in Table 1, cellulose was then added to the solution, and the mixture was further dissolved to obtain a mixed solution.

Next, the dope solutions obtained in each of the Examples and Comparative Examples shown in Table 1 were heated to 50 to 60 °C and spun by extrusion into water.

The evaluation symbols for spinnability are as follows. ◎: Spinnability is good ○: Spinning is possible, but adaptation such as spinning at a high temperature is required because of high viscosity ×: Spinning is impossible because the material becomes powder, or the like

Then, the obtained spun cotton was washed with water and dried, after which the nitrogen content was measured by the Kjeldahl analysis, and the measured protein content was determined by multiplying by a protein conversion factor. Further, the spun cotton was dried in a circulating drier (105 °C, 90 minutes), which was converted into solid content to seek the measured protein content/solid content.

The ratio of the measured protein content/solid content to the theoretical protein content/solid content was sought as the residual ratio.

As shown in Table 1, a residual ratio of 80% or more was confirmed in Examples 1 to 11. In Comparative Example 2 using hydrolyzed eggshell membrane (water-soluble), the residual ratio was 12%. Furthermore, the polymer molded body, which was prepared in accordance with Comparative Example 1 in which cellulose was not comprised, became powder and could not be spun, and therefore the protein content was not measured.

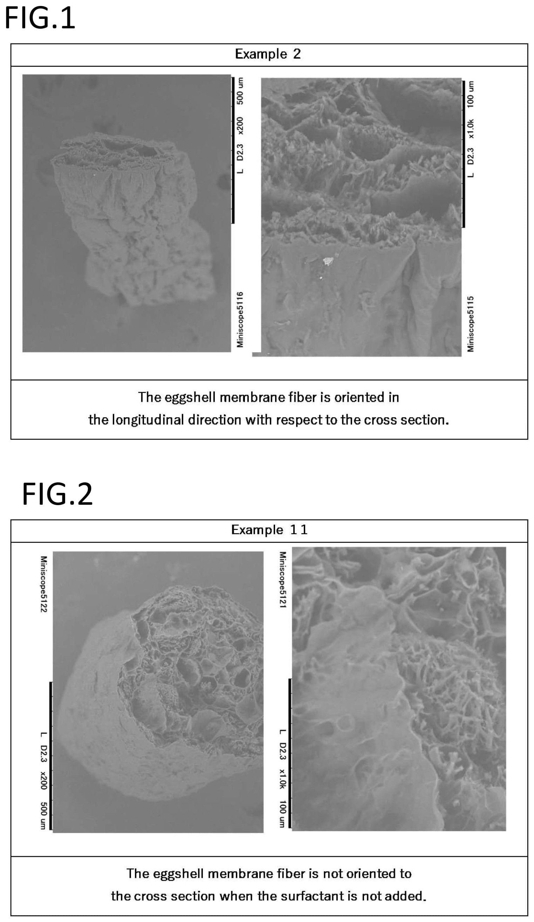

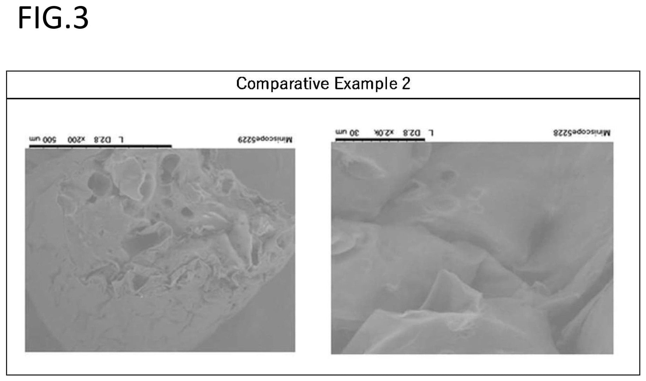

Scanning electron microscope (SEM) photographs of cross sections of spun cotton spun using the solutions obtained in Example 2, Example 11, and Comparative Example 2 are shown in Figures **1** to **3,** respectively. In the spun cotton of Example 2, it can be seen that the fibers are oriented in the longitudinal direction with respect to the cross section (Figure **1**). In Example 11, in which no surfactant was added, spinning was possible although the fibers were not oriented with respect to the cross section (Figure **2**). In Comparative Example 2, spinning was possible, but from the viewpoint of effective utilization of water-soluble protein, a residual ratio of 12% is considered unsuitable for effective utilization (Figure **3**).

(Note)

As described above, the present disclosure has been illustrated using preferred embodiments of the present disclosure. However, it is understood that the scope of the present disclosure should be interpreted only by the Claims. It is also understood that the patents, patent applications, and other documents cited herein are incorporated herein by reference as though their contents were specifically described herein. The present application claims priority to Japanese Patent Application No. 2023-178243 filed with the Japan Patent Office on October 16, 2023, and the entire content thereof is incorporated herein by reference as though they constituted the content of the present application.

[Industrial Applicability]

The protein solution obtained by the method of the present invention and a molded body thereof can be utilized in chemical product applications in the form of fibers or films, cosmetic applications such as face mask materials or powders, medical applications as wound dressings, and regenerative medicine applications such as cell culture scaffolds. Furthermore, since the material has good biodegradability, it is also expected to be useful as an agricultural material.

## Claims

1. A method of dissolving a sparingly water-soluble protein, the method comprising the step of mixing a hydroxyl group-containing polymer, a sparingly water-soluble protein, and an ionic liquid.

2. The method of claim 1, further comprising the step of mixing a dissolution assisting agent.

3. The method of claim 2, wherein the dissolution assisting agent is a surfactant.

4. The method of claim 3, wherein the surfactant is a cationic surfactant having a superacid as a counter ion.

5. The method of claim 3, wherein when a total weight of the sparingly water-soluble protein and a hydroxyl group-containing polymer is set as 100 wt%, a content of the surfactant is about 0.05 to about 10 wt%.

6. The method of claim 1, wherein when a total weight of the sparingly water-soluble protein and a hydroxyl group-containing polymer is set as 100 wt%, a content of the sparingly water-soluble protein is about 5 to about 90 wt%.

7. The method of claim 1, wherein the sparingly water-soluble protein comprises eggshell membrane, wool, chicken feather, silk, and scale, and a partial hydrolysate and/or a partially reduced product thereof.

8. The method of claim 1, wherein the ionic liquid comprises imidazolium cation, pyridinium cation, and alkylammonium cation.

9. The method of claim 1, wherein the hydroxyl group-containing polymer comprises a modified hydroxyl group-containing polymer in which a functional group is bonded to the hydroxyl group-containing polymer.

10. The method of claim 1, wherein the hydroxyl group-containing polymer comprises cellulose, polyvinyl alcohol, and a saponified product of polyvinyl acetate.

11. A dissolved product obtained by dissolving a hydroxyl group-containing polymer and a sparingly water-soluble protein in an ionic liquid.

12. The dissolved product of claim 11, further comprising a dissolution assisting agent.

13. The dissolved product of claim 12, wherein the dissolution assisting agent is a surfactant.

14. The dissolved product of claim 13, wherein the surfactant is a cationic surfactant having a superacid as a counter ion.

15. The dissolved product of claim 13, wherein when a total weight of the sparingly water-soluble protein and a hydroxyl group-containing polymer is set as 100 wt%, a content of the surfactant is about 0.05 to about 10 wt%.

16. The dissolved product of claim 11, wherein when a total weight of the sparingly water-soluble protein and a hydroxyl group-containing polymer is set as 100 wt%, a content of the sparingly water-soluble protein is about 5 to about 90 wt%.

17. The dissolved product of claim 11, wherein the sparingly water-soluble protein comprises eggshell membrane, wool, chicken feather, silk, and scale, and a partial hydrolysate and/or a partially reduced product thereof.

18. The dissolved product of claim 11, wherein the ionic liquid comprises imidazolium cation, pyridinium cation, and alkylammonium cation.

19. The dissolved product of claim 11, wherein the hydroxyl group-containing polymer comprises a modified hydroxyl group-containing polymer in which a functional group is bonded to the hydroxyl group-containing polymer.

20. The dissolved product of claim 11, wherein the hydroxyl group-containing polymer comprises cellulose, polyvinyl alcohol, and a saponified product of polyvinyl acetate.

21. A method of manufacturing a polymer molded body containing a sparingly water-soluble protein, the method

comprising:

the step of providing an ionic liquid in which a sparingly water-soluble protein and a hydroxyl group-containing polymer are dissolved; and
the step of precipitating a polymer molded body from the ionic liquid.

**22.** The method of claim 21, wherein providing the ionic liquid is carried out by:

(a) the step of mixing a sparingly water-soluble protein with an ionic liquid;
(b) the step of mixing a hydroxyl group-containing polymer with an ionic liquid; and
(c) the step of mixing a protein solution obtained in step (a) with a polymer solution obtained in step (b).

**23.** The method of claim 21, wherein providing the ionic liquid is carried out by:
the step of mixing a sparingly water-soluble protein and a hydroxyl group-containing polymer with an ionic liquid simultaneously or sequentially.

**24.** The method of claim 21, wherein a dissolution assisting agent is further mixed in the ionic liquid.

**25.** The method of claim 21, wherein the sparingly water-soluble protein comprises eggshell membrane, wool, chicken feather, silk, and scale, and a partial hydrolysate and/or a partially reduced product thereof.

**26.** The method of claim 21, wherein the ionic liquid comprises imidazolium cation, pyridinium cation, and alkylammonium cation.

**27.** The method of claim 21, wherein the hydroxyl group-containing polymer comprises a modified hydroxyl group-containing polymer in which a functional group is bonded to the hydroxyl group-containing polymer.

**28.** The method of claim 21, wherein the hydroxyl group-containing polymer comprises cellulose, polyvinyl alcohol, and a saponified product of polyvinyl acetate.

**29.** A method of manufacturing a polymer molded body containing a sparingly water-soluble protein, the method comprising
the step of extruding the dissolved product of claim 11 into a poor solvent for a hydroxyl group-containing polymer and a sparingly water-soluble protein.

**30.** A polymer molded body containing a sparingly water-soluble protein, the molded body being obtained by a method comprising:

the step of providing an ionic liquid in which a sparingly water-soluble protein and a hydroxyl group-containing polymer are dissolved; and
the step of precipitating a polymer molded body from the ionic liquid.

**31.** The molded body of claim 30, wherein providing the ionic liquid is carried out by:

(a) the step of mixing a sparingly water-soluble protein with an ionic liquid;
(b) the step of mixing a hydroxyl group-containing polymer with an ionic liquid; and
(c) the step of mixing a protein solution obtained in step (a) with a polymer solution obtained in step (b).

**32.** The molded body of claim 30, wherein providing the ionic liquid is carried out by:
the step of mixing a sparingly water-soluble protein and a hydroxyl group-containing polymer with an ionic liquid simultaneously or sequentially.

**33.** The molded body of claim 30, wherein the molded body comprises fiber, yarn, fabric, knit, braid, nonwoven fabric, and film.

**34.** A kit for manufacturing a polymer molded body containing a sparingly water-soluble protein, the kit comprising an ionic liquid, a hydroxyl group-containing polymer, and a sparingly water-soluble protein.

**35.** The kit of claim 34, further comprising a dissolution assisting agent.

**36.** The kit of claim 35, wherein the dissolution assisting agent is a surfactant.

**37.** The kit of claim 36, wherein the surfactant is a cationic surfactant having a superacid as a counter ion.

**38.** The kit of claim 36, wherein when a total weight of the sparingly water-soluble protein and a hydroxyl group-containing polymer is set as 100 wt%, a content of the surfactant is about 0.05 to about 10 wt%.

**39.** The kit of claim 34, wherein when a total weight of the sparingly water-soluble protein and a hydroxyl group-containing polymer is set as 100 wt%, a content of the sparingly water-soluble protein is about 5 to about 90 wt%.

**40.** The kit of claim 34, wherein the sparingly water-soluble protein comprises eggshell membrane, wool, chicken feather, silk, and scale, and a partial hydrolysate and/or a partially reduced product thereof.

**41.** The kit of claim 34, wherein the ionic liquid comprises imidazolium cation, pyridinium cation, and alkylammonium cation.

**42.** The kit of claim 34, wherein the hydroxyl group-containing polymer comprises a modified hydroxyl group-containing polymer in which a functional group is bonded to the hydroxyl group-containing polymer.

**43.** The kit of claim 34, wherein the hydroxyl group-containing polymer comprises cellulose, polyvinyl alcohol, and a saponified product of polyvinyl acetate.

FIG.1

Example 2
L D2.3 x200 500 um
Miniscope5116
L D2.3 x1.0k 100 um
Miniscope5115

The eggshell membrane fiber is oriented in the longitudinal direction with respect to the cross section.

FIG.2

Example 11
Miniscope5122
L D2.3 x200 500 um
Miniscope5121
L D2.3 x1.0k 100 um

The eggshell membrane fiber is not oriented to the cross section when the surfactant is not added.

FIG.3

Comparative Example 2

## INTERNATIONAL SEARCH REPORT

International application No.
**PCT/JP2024/036652**

**A. CLASSIFICATION OF SUBJECT MATTER**

***C08L 89/04***(2006.01)i; ***C08K 5/19***(2006.01)i; ***C08L 1/00***(2006.01)i; ***C08L 29/04***(2006.01)i; ***C08L 31/04***(2006.01)i
FI: C08L89/04; C08L1/00; C08L29/04 B; C08L31/04 B; C08K5/19

According to International Patent Classification (IPC) or to both national classification and IPC

**B. FIELDS SEARCHED**

Minimum documentation searched (classification system followed by classification symbols)

C08L89/04; C08K5/19; C08L1/00; C08L29/04; C08L31/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 111995772 A (GUIZHOU UNIVERSITY) 27 November 2020 (2020-11-27) claims, examples, etc. | 1-43 |
| X | CN 101220523 A (DONGHUA UNIVERSITY) 16 July 2008 (2008-07-16) claims, examples, etc. | 1-43 |
| X | CN 103710775 A (INSTITUTE OF PROCESS ENGINEERING, CHINESE ACADEMY OF SCIENCES) 09 April 2014 (2014-04-09) claims, examples, etc. | 1-43 |
| X | CN 105970346 A (INSTITUTE OF PROCESS ENGINEERING, CHINESE ACADEMY OF SCIENCES) 28 September 2016 (2016-09-28) claims, examples, etc. | 1-43 |
| A | CN 116333085 A (BEIJING GRAPHENE INSTITUTE) 27 June 2023 (2023-06-27) | 1-43 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/036652**

C. DOCUMENTS CONSIDERED TO BE RELEVANT

| Category* | Citation of document, with indication, where appropriate, of the relevant passages | Relevant to claim No. |
|---|---|---|
| P, X | CN 117946242 A (ZHANGJIAGANG YANGZI DYEING AND FINISHING CO., LTD.) 30 April 2024 (2024-04-30) claims, examples, etc. | 1-43 |
| P, A | JP 2023-165236 A (PHARMA FOODS INTERNATIONAL CO., LTD.) 15 November 2023 (2023-11-15) | 1-43 |

Form PCT/ISA/210 (second sheet) (July 2022)

**INTERNATIONAL SEARCH REPORT**
**Information on patent family members**

International application No.
**PCT/JP2024/036652**

| Patent document cited in search report | Publication date (day/month/year) | Patent family member(s) | Publication date (day/month/year) |
|---|---|---|---|
| CN 111995772 A | 27 November 2020 | (Family: none) | |
| CN 101220523 A | 16 July 2008 | (Family: none) | |
| CN 103710775 A | 09 April 2014 | (Family: none) | |
| CN 105970346 A | 28 September 2016 | (Family: none) | |
| CN 116333085 A | 27 June 2023 | (Family: none) | |
| CN 117946242 A | 30 April 2024 | (Family: none) | |
| JP 2023-165236 A | 15 November 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6288686 B
- JP 2018177713 A
- JP 2009089859 A
- JP 5166953 B
- JP 4387806 B
- JP 2004084154 A
- JP 4070579 B
- JP 5071613 B
- JP 2023178243 A